# EUROPÄISCHE PATENTSCHRIFT

(11) **EP 2 167 792 B1**
(45) Veröffentlichungstag und Bekanntmachung des Hinweises auf die Patenterteilung: **01.06.2011**
(21) Anmeldenummer: 08760810.5
(22) Anmeldetag: 11.06.2008
(51) Int. Cl.: F01D 11/00, F01D 25/16, F01D 25/18

(54) **TURBOLADER VON EINEM FAHRZEUG MIT EINER SPEZIFISCHEN DICHTUNGSANORDNUNG**
VEHICLE TURBOCHARGER WITH A SPECIFIC SEAL
TURBOCOMPRESSEUR D'UN VÉHICULE PRÉSENTANT UN DISPOSITIF D'ÉTANCHÉITÉ SPÉCIFIQUE

(30) Priorität: 18.06.2007 DE 102007027869
(43) Veröffentlichungstag der Anmeldung: 31.03.2010
(73) Patentinhaber: Continental Automotive GmbH, 30165 Hannover (DE)
(72) Erfinder: BÖNING, Ralf, 67829 Reiffelbach (DE); CLAUS, Hartmut, 67269 Grünstadt (DE); FRANKENSTEIN, Dirk, 67550 Worms (DE); FÄTH, Holger, 67136 Fussgönheim (DE); HELD, Jochen, 67295 Bolanden-Weierhof (DE); KRAUSS, Stefan, 67227 Frankenthal (DE); NOWACK, Stefan, 67292 Kirchheimbolanden (DE)
(86) Internationale Anmeldenummer: PCT/EP2008/057251
(87) Internationale Veröffentlichungsnummer: WO 2008/155267

(56) Entgegenhaltungen:
- EP-A- 1 947 373
- WO-A-98/23886
- FR-A- 2 878 007
- GB-A- 2 055 159
- US-A- 2 953 416
- US-A- 4 314 705

## Beschreibung

Die Erfindung betrifft einen Turbolader mit einem Turboladergehäuse, in welchem wenigstens ein Laufrad, wie ein Turbinenrad und/oder ein Verdichterrad gelagert ist.

Turbolader weisen normalerweise ein Gehäuse auf, in dem ein Turbinenrad und ein Verdichterrad auf einer Welle drehbar mittels Radiallagern gelagert sind. Dabei kann die Welle Umdrehungen von beispielsweise bis zu 300.000 U/min erreichen. Um auftretende Axialkräfte aufzunehmen kann auch beispielsweise wenigstens ein Axiallager vorgesehen werden. Die Lager werden hierbei mittels eines entsprechenden Schmieröls geschmiert.

Bei dem Turbolader kann es aufgrund seiner ölgeschmierten Lagerung zum Ölverlust in die Turbine und/oder den Verdichter kommen. Beim Turbolader erfolgt eine dynamische Abdichtung über Kolbenringe, diese können jedoch nicht geeignet einen Übertritt von Schmieröl zur Turbinenseite bzw. zur Verdichterseite hin verhindern. Aufgrund neuester Abgastechnik ist ein Übertritt, insbesondere turbinenseitig möglichst zu vermeiden, da es beispielsweise zur Verschlackung des Russpartikelfilters bzw. des Katalysators führen kann, was zur Folge hat, dass deren Wirksamkeit massiv beeinträchtigt wird.

Demnach ist es die Aufgabe der vorliegenden Erfindung, ein Turboladergehäuse bereitzustellen, das mit einer Öldrossel versehen ist, das einen Übertritt von Schmieröl zu Turbinenseite bzw. zur Verdichterseite zumindest reduziert.

Diese Aufgabe wird durch ein Turboladergehäuse mit den Merkmalen des Patentanspruchs 1 gelöst.

US 4 314 705 beschreibt die technischen Merkmale gemäß dem Oberbegriff vom Anspruch 1

Demgemäß wird erfindungsgemäß ein Turbolader mit einem Turboladergehäuse bereitgestellt, mit:
- einer Durchtrittsöffnung für eine Welle,
- wobei die Welle drehbar mittels einer Lageranordnung in dem Gehäuse gelagert ist,
- wobei zur Schmierung der Lager Schmieröl zugeführt wird,
   und
- wobei ein erhöhter Absatz der Welle an der Außenseite zumindest eines Lagers vorgesehen ist, der mit dem Gehäuse einen Spalt bildet, der als Schmieröldrossel ausgebildet ist, um einen Durchtritt von Schmieröl von Seiten des Lagers zumindest zu reduzieren und wobei eine Aussparung in dem Gehäuse im Anschluss an den Spalt angeordnet ist, wobei das Gehäuse und die Welle einen Raum zur Aufnahme eines Entspannungsvolumens von Schmieröl bilden.

Das Lager hat dabei den Vorteil, dass der Schmierölfluss durch die Schmieröldrossel gedrosselt werden kann, so dass der Fluss an Schmieröl zum Turbinenrad bzw. Verdichterrad erheblich reduziert oder im Wesentlichen ganz unterbunden werden kann. Dadurch kann eine Verschlackung des Russpartikelfilters bzw. des Katalysators verhindert und damit deren Wirksamkeit aufrechterhalten werden, im Gegensatz zum Stand der Technik, wie er oben beschrieben wurde.

Vorteilhafte Ausgestaltungen und Weiterbildungen der Erfin-dung ergeben sich aus den Unteransprüchen sowie der Beschreibung unter Bezugnahme auf die Zeichnungen.

Darüber hinaus bilden das Gehäuse und die Welle einen Raum zur Aufnahme eines Entspannungsvolumens an Schmieröl. Dies hat den Vorteil, dass in diesem Raum ein Teil des Schmieröls zunächst zurückgehalten werden kann.

Gemäß einer Ausgestaltung der Erfindung weist der Spalt eine Spalthöhe auf, die geeignet ist einen Schmierölfluss zu drosseln. Ein solcher Spalt hat den Vorteil, dass er eine sehr einfache und leicht herzustellende Ausgestaltung darstellt, um eine Öldrossel bereitzustellen.

In einer weiteren Ausgestaltung der Erfindung ist in dem Spalt wenigstens ein Dichtelement angeordnet ist, um einen Öldurchtritt zu reduzieren oder im Wesentlichen zu verhindern. Dies stellt ebenfalls eine einfache und leicht herzustellende Ausgestaltung dar, um eine Öldrossel zu bilden. Der Spalt kann dabei wahlweise durch das Vorsehen einer zusätzlichen Dichtung auch etwas größer gewählt werden als die Variante ohne Dichtung.

In einer anderen erfindungsgemäßen Ausführungsform ist eine Vertiefung in dem Absatz der Welle vorgesehen, wobei die Vertiefung im Anschluss an den Spalt angeordnet ist und zur Aufnahme von Schmieröl dient, welches durch die Öldrossel gelangt. In der Vertiefung kann dabei Schmieröl gesammelt und zurückgehalten werden.

In einer anderen erfindungsgemäßen Ausführungsform ist der Spalt auf der Seite der Welle angeordnet, an der das Turbinenrad und/oder das Verdichterrad befestigt ist, so dass eine Öldrossel vorgesehen werden kann, um einen unkontrollierten ölfluß zum Turbinenrad bzw. zum Verdichterrad zu verhindern. Dies hat den Vorteil, dass grundsätzlich sowohl auf der Turbinenseite wie auch auf der Verdichterseite eine solche Öldrossel angeordnet werden kann.

In einer anderen erfindungsgemäßen Ausführungsform ist ein Abfluss für das Schmieröl der Lageranordnung in dem Gehäuse vorgesehen. Dadurch kann das Öl sehr einfach abgeführt werden. Der Ölabfluss kann dabei mit dem Raum verbunden sein, in dem sich das Entspannungsvolumen sammelt oder mit der Vertiefung, die einem Auffangraum gegenüberliegt. Dies sind jedoch nur einige Beispiele wo der Ölabfluss vorgesehen werden kann. Die Erfindung ist jedoch nicht darauf beschränkt. So kann der Ölabfluss an jeder Stelle angeordnet sein, die geeignet ist, um Schmieröl abzuführen und einen Übertritt des öls zum Turbinenrad bzw. Verdichterrad zu verhindern.

Gemäß einer weiteren erfindungsgemäßen Ausführungsform ist ein Ölfangraum gegenüber dem Absatz der Welle angeordnet ist. Dies hat den Vorteil, dass Schmieröl, das von der Welle weggeschleudert wird, in dem Ölfangraum aufgenommen werden kann.

In einer anderen erfindungsgemäßen Ausführungsform ist in der Welle eine entsprechende Vertiefung in dem Absatz gegenüber dem Ölfangraum vorgesehen. Dies hat den Vorteil, dass Schmieröl das in dem Ölauffangraum aufgesammelt wird zum Teil zumindest in der Vertiefung gesammelt werden kann. Dadurch kann das Schmieröl zurückgehalten werden, bevor es zu dem Turbinen- oder Verdichterrad gelangen kann.

Die Erfindung wird nachfolgend anhand der in den schematischen Figuren der Zeichnungen angegebenen Ausführungsbeispiele näher erläutert. Es zeigen:
- Fig. 1: einen Ausschnitt eines Turboladergehäuses gemäß dem Stand der Technik, in einer Schnittansicht;
- Fig. 2: eine Schnittansicht eines Turboladergehäuses gemäß einer ersten Ausführungsform der Erfindung, und
- Fig. 3: eine Schnittansicht eines Turboladergehäuses gemäß einer zweiten Ausführungsform der Erfindung.

In allen Figuren sind gleiche bzw. funktionsgleiche Elemente und Vorrichtungen - sofern nichts anderes angegeben ist - mit denselben Bezugszeichen versehen worden.

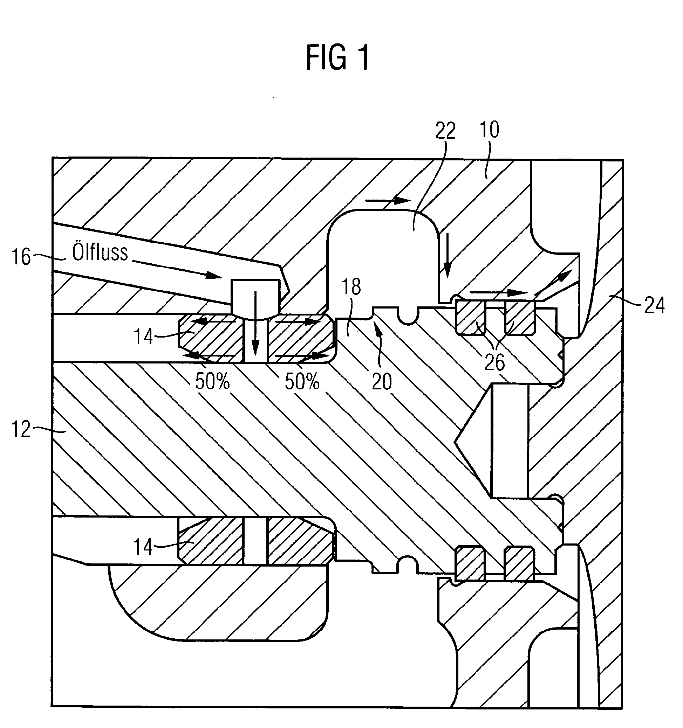

In Fig. 1 ist ein Ausschnitt eines Turboladergehäuses 10 gemäß dem Stand der Technik in einer Schnittansicht gezeigt. In dem Gehäuse 10 ist eine Turbowelle 12 angeordnet, die über jeweils ein Radiallager 14 auf jeder Seite drehbar gelagert ist. Zur Schmierung der Lagerung 14 ist eine Schmierölzufuhr 16 vorgesehen, beispielsweise in Form einer Bohrung durch die Schmieröl zu den Lagern 14 geleitet wird. Auf der Außenseite des in Fig. 1 gezeigten Radiallagers 14 ist ein erhöhter Absatz 18 vorgesehen mit einer Ölschleuderkante 20. Die Ölschleuderkante 20 liegt dabei einem Ölauffangraum 22 im Gehäuse 10 des Turboladers gegenüber. Im Anschluss an die Ölschleuderkante 20 ist der Absatz 18, an dessen Ende ein Turbinenrad 24 befestigt ist, mit zwei Kolbenringen bzw. Kolbenringdichtungen 26 zur Abdichtung versehen.

Im Betrieb passiert mit dem Schmieröl folgendes. Das Schmieröl das über die Ölzufuhr 16 dem Radiallager 14 zugeführt wird, tritt axial aus der Lagerung aus, wie mit den Pfeilen in Fig. 1 eingezeichnet ist. Dabei tritt in beiden Richtungen des jeweiligen Lagers 14 ungefähr 50% des Schmieröls aus, wie mit den Pfeilen in Fig. 1 eingezeichnet ist.

Das ausgetretene Schmieröl wird von der Ölschleuderkante 20 von der Turbowelle 12 weggeschleudert und in dem gegenüberliegenden Ölauffangraum 22 des Turboladergehäuses 10 aufgefangen und nach unten zu dem Absatz der Welle 12 abgeführt. Ein Ölübertritt zur Turbine bzw. zum Turbinenrad 24 ist dabei trotz der vorgesehenen Kolbenringe 26 bei ungünstigen Druckverhältnissen leicht möglich mit den bekannten Folgen, wie der Verschmutzung von Russpartikelfilter und Katalysator.

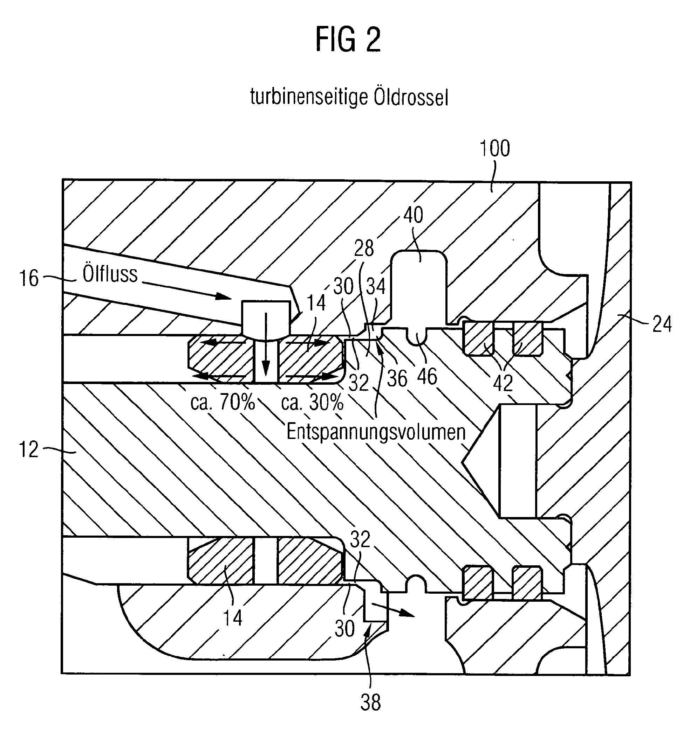

Um diesen Schmierölübertritt zu verhindern oder zumindest einzuschränken wird ein Turboladergehäuse 100 gemäß einer ersten Ausführungsform der Erfindung bereitgestellt, wie es in Fig. 2 dargestellt ist.

Das Turboladergehäuse 100 weist dabei zunächst ebenfalls beispielsweise zwei Radiallager 14 auf jeder Seite der Turbowelle 12 auf. Über einen Ölzufluss 16 wird dem jeweiligen Lager 14 Schmieröl zugeführt. An der Außenseite des einen Radiallagers 14 ist dabei ein erhöhter Absatz 28 ausgebildet, wie in Fig. 2 gezeigt ist. Dieser Absatz 28 kann entsprechend auch auf der anderen Seite bei dem anderen Radiallager (nicht dargestellt) vorgesehen werden. Dies gilt für alle erfindungsgemäßen Ausführungsformen.

Der erhöhte Absatz 28 bildet dabei mit dem Turboladergehäuse 10 einen schmalen Spalt 30 aus an seinem vorderen Ende. Der Spalt 30 ist dabei zumindest teilweise oder vollständig umlaufend und bildet eine Öldrossel 32. Dies bewirkt, dass der Hauptteil des Schmieröls, beispielsweise 70%, nicht in Richtung Turbinenrad austritt sondern in die entgegengesetzte Richtung, wie mit den Pfeilen in Fig. 2 eingezeichnet ist. Lediglich beispielsweise 30% des Schmieröls wandern zu bzw. durch den Spalt 30. Die Angaben von 70% und 30% sind dabei lediglich beispielhaft.

Im Anschluss an diesen Spalt 30 ist in dem Turboladergehäuse 100, wie in Fig. 2 dargestellt ist, eine Aussparung 34 vorgesehen, um einen Raum 36 zu bilden zur Aufnahme eines Entspannungsvolumens von Schmieröl. Dabei kann zusätzlich auch eine entsprechende Vertiefung (nicht dargestellt) in dem Absatz 28 vorgesehen werden. Alternativ kann auch statt der Aussparung 34 nur die Vertiefung (nicht dargestellt) in dem Absatz vorgesehen werden, um einen Raum für ein Entspannungsvolumen zu bilden.

Zusätzlich ist eine Schmierölführung bzw. ein Ölablauf 38 in dem Turboladergehäuse 10 vorgesehen, aus der das Schmieröl, das beispielsweise in der Aussparung 34 gesammelt wurde, geeignet abfließen kann, ohne dabei zu der Turbine bzw. dem Turbinenrad 24 überzutreten.

Im Anschluss an die Aussparung 34 ist der ölauffangraum 40 vorgesehen, in dem Schmieröl das bis zu diesem Bereich an dem Absatz 28 gelangt und von der Welle 12 weggeschleudert wird aufgefangen werden kann. Gegenüberliegend dem Ölauffangraum 40 ist eine Vertiefung 46 in dem Absatz 28 ausgebildet, in der das in dem Ölauffangraum 40 aufgefangene Schmieröl aufgenommen werden kann und dadurch nicht direkt in Richtung des Turbinenrads 24 weitergeleitet wird. Im Anschluss an den Ölauffangraum 40 ist eine Kolbendichtungsanordnung auf dem Absatz vorgesehen, an der beispielsweise zwei Kolbendichtungen 42 vorgesehen sind.

Durch die gezielte Führung des Schmieröls, das aus der Lagerung 14 abfließt, hier in Fig. 2 beispielsweise über den Öldrosselspalt 30 und die Aussparung 34 und die Führung 38 zum Ablassen des Schmieröls in dem Turboladergehäuse 100, kann effizient verhindert werden, dass große Mengen an Öl an die Kolbenringabdichtung 42 gelangen können und dabei zu der Turbine bzw. dem Turbinenrad 24 bei ungünstigen Druckverhältnissen übertreten können.

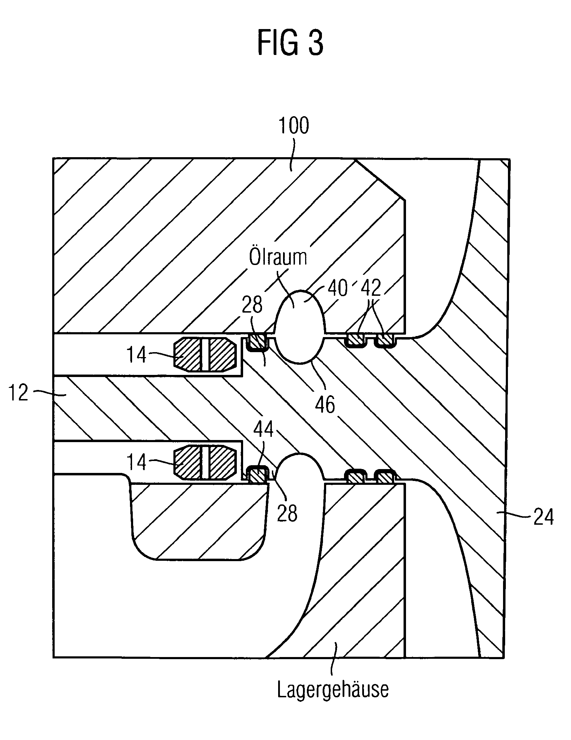

Eine zweite Ausführungsform des erfindungsgemäßen Turboladergehäuses 100 ist in Fig. 3 schematisch und stark vereinfacht dargestellt.

In dem Turboladergehäuse 100 ist dabei ebenfalls eine Welle 12 drehbar mittels Radiallagern 14 gelagert. Die Schmierölzuführung zum Zuführen von Schmieröl zu den Lagern 14 ist dabei aus Gründen der Übersichtlichkeit weggelassen worden. Wie in der ersten Ausführungsform ist an der Außenseite des Lagers 14 ein erhöhter Absatz 28 vorgesehen. Der Absatz 28 bildet dabei mit seinem vorderen Ende einen Spalt 30, der zumindest teilweise oder vollständig umlaufen ausgebildet ist, wobei in dem Spalt 30 wenigstens ein Dichtungselement 44 vorgesehen ist, um eine Öldrossel zu bilden. Das Dichtungselement 44 kann dabei eine Kolbenringdichtung sein.

Im Anschluss an den Spalt 30 ist der Ölauffangraum 40 vorgesehen, wobei gegenüberliegend dem Ölauffangraum 40 eine entsprechende Vertiefung 46 in dem Absatz 28 vorgesehen ist. Die Vertiefung 46 kann dabei ebenfalls teilweise oder vollständig umlaufen ausgebildet sein. Gelangt ein Teil des Schmieröls trotz der Öldrossel 32 in diesen Bereich des Absatzes 28, so kann das Schmieröl zwar von dem Absatz 28 weggeschleudert und in dem Ölauffangraum 40 aufgefangen werden. Das Schmieröl wird jedoch zurückgeführt und gelangt dabei in die dem Aufnahmeraum 40 zumindest teilweise oder vollständig gegenüberliegende Vertiefung 46 auf dem Absatz 28. Durch die Vertiefung 46 in dem Absatz 28 der Welle 12 wird es dem Schmieröl erheblich erschwert seitlich auszutreten und über eine nachfolgende Kolbenringdichtung 42 in den Turbinenbereich bzw. zum Turbinenrad 24 hin einzudringen. Eine Schmierölzuführung 16 sowie eine Schmierölabführung bzw. ein Ölablauf 38, wie beispielsweise in der ersten Ausführungsform, wurden aus Gründen der Übersichtlichkeit weggelassen.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Die zuvor beschriebenen Ausführungsformen sind dabei miteinander kombinierbar, insbesondere einzelne Merkmale davon.

Insbesondere können die vorliegenden Ausführungsformen des erfindungsgemäßen Turboladergehäuses 10 auch miteinander kombiniert werden. Insbesondere können einzelne Merkmale der beiden Ausführungsformen miteinander kombiniert werden, ohne von dem Schutzumfang der Ansprüche abzuweichen.

So kann beispielsweise in der zweiten Ausführungsform statt der Vertiefung 46 oder zusätzlich zu der Vertiefung 46 der Aufnahmeraum 36 bzw. die Aussparung 34 der ersten Ausführungsform vorgesehen werden. Grundsätzlich ist aber auch denkbar, beispielsweise den Aufnahmeraum 36 zusätzlich in der zweiten Ausführungsform vorzusehen, wobei wahlweise davor und/oder dahinter wenigstens eine oder mehrere Dichtungen vorgesehen werden können.

Des Weiteren kann die Öldrossel 32 in Form eines Spalts 30 ohne zusätzliche Dichtung 44, gemäß der ersten Ausführungsform auch bei der zweiten Ausführungsform vorgesehen werden. Dabei kann diese Form der Öldrossel 32 der ersten Ausführungsform zusätzlich oder alternativ zu der Öldrossel 32 der zweiten Ausführungsform vorgesehen werden. Umgekehrt kann auch die Öldrossel 32 mittels Dichtung 44 der zweiten Ausführungsform auch bei der ersten Ausführungsform vorgesehen werden und zwar alternativ oder zusätzlich.

Außerdem kann bei beiden erfindungsgemäßen Ausführungsformen neben zwei Kolbenringdichtungen 42 am Ende vor dem jeweiligen Laufrad, wie in den Fig. 2 und 3 dargestellt ist, auch nur eine Kolbenringdichtung 42 oder mehr als zwei Kolberingdichtungen 42 vorgesehen werden. Grundsätzlich kann aber auch eine andere Dichtung angeordnet werden, die geeignet ist einen Durchtritt an Schmieröl im Wesentlichen zu verhindern oder zumindest zu unterdrücken.

Des Weiteren ist die vorliegende Erfindung und die beiden Ausführungsformen nicht darauf beschränkt, den Übertritt von Schmieröl in die Turbine zu reduzieren oder im Wesentlichen zu verhindern. Grundsätzlich kann das Tuboladergehäuse 10 auf der Seite der Turbine und/oder des Verdichters mit einer Öldrossel 32 versehen sein. Die beiden erfindungsgemäßen Ausführungsformen, wie sie in den Fig. 2 und 3 gezeigt sind, lassen sich ebenso auf den Verdichter bzw. die Verdichterseite übertragen. Dies gilt auch für die zuvor beschriebenen Kombinationen der ersten und zweiten Ausführungsform.

## Patentansprüche

1. Turbolader mit einem Turboladergehäuse (100), mit:
einer Durchtrittsöffnung für eine Welle (12),
- wobei die Welle (12) drehbar mittels einer Lageranordnung (14) in dem Gehäuse (100) gelagert ist,
- wobei zur Schmierung der Lager (14) Schmieröl zugeführt wird,
- wobei ein erhöhter Absatz (28) der Welle (12) an der Außenseite zumindest eines Lagers (14) vorgesehen ist, der mit dem Gehäuse (100) einen Spalt (30) bildet, der als Schmieröldrossel (32) ausgebildet ist, um einen Durchtritt von Schmieröl von Seiten des Lagers (14) zumindest zu reduzieren, und
- wobei eine Aussparung (34) in dem Gehäuse (10) im Anschluss an den Spalt (30) angeordnet ist **dadurch gekennzeichnet, dass** das Gehäuse (10) und die Welle (12) einen Raum (36) zur Aufnahme eines Entspannungsvolumens von Schmieröl bilden.

2. Turbolader nach Anspruch 1,
**dadurch gekennzeichnet,**
**dass** der Spalt (30) eine Spalthöhe aufweist, die geeignet ist einen Schmierölfluss zu drosseln.

3. Turbolader nach wenigstens einem der Ansprüche 1 oder 2,
**dadurch gekennzeichnet,**
**dass** in dem Spalt (30) wenigstens ein Dichtelement (42, 44) angeordnet ist, um einen Öldurchtritt zu reduzieren oder im Wesentlichen zu verhindern.

4. Turbolader nach wenigstens einem der Ansprüche 1 bis 3,
**dadurch gekennzeichnet,**
**dass** eine Vertiefung (46) in dem Absatz (28) der Welle (12) vorgesehen ist, wobei die Vertiefung (46) im Anschluss an den Spalt (30) angeordnet ist und zur Aufnahme von Schmieröl dient, welches durch die Öldrossel (32) gelangt.

5. Turbolader nach wenigstens einem der Ansprüche 1 bis 4,
**dadurch gekennzeichnet,**
**dass** der Spalt (30) zumindest teilweise oder vollständig umlaufen ausgebildet ist.

6. Turbolader nach wenigstens einem der Ansprüche 1 bis 5,
**dadurch gekennzeichnet,**
**dass** der Spalt (30) auf der Seite der Welle (12) angeordnet ist, an der das Turbinenrad (24) und/oder das Verdichterrad befestigt ist.

7. Turbolader nach wenigstens einem der Ansprüche 1 bis 6,
**dadurch gekennzeichnet,**
**dass** ein Abfluss (38) für das Schmieröl der Lageranordnung (14) in dem Gehäuse (10) vorgesehen ist.

8. Turbolader nach wenigstens einem der Ansprüche 1 bis 7,
**dadurch gekennzeichnet,**
**dass** ein Ölfangraum (40) gegenüber dem Absatz (28) der Welle (12) angeordnet ist.

9. Turbolader nach Anspruch 8,
**dadurch gekennzeichnet,**
**dass** in der Welle (12) die Vertiefung (46) in dem Absatz (28) gegenüber dem Ölfangraum (40) vorgesehen ist.

10. Fahrzeug mit einem Turbolader nach einem der Ansprüche 1 bis 9.

## Claims

1. Turbocharger having a turbocharger housing (100), having:
a passage opening for a shaft (12),
- the shaft (12) being rotatably mounted in the housing (100) by means of a bearing arrangement (14),
- lubricating oil being supplied for lubricating the bearing (14),
- an elevated shoulder (28) of the shaft (12) being provided at the outer side of at least one bearing (14), which shoulder (28) together with the housing (100) forms a gap (30) designed as a lubricating oil throttle (32) in order to at least reduce a passage of lubricating oil from the bearing (14),
- a cutout (34) being arranged in the housing (10) adjacent to the gap (30), **characterized in that** the housing (10) and the shaft (12) form a chamber (36) for receiving an expansion volume of lubricating oil.

2. Turbocharger according to Claim 1,
**characterized**
**in that** the gap (30) has a gap height suitable for throttling a lubricating oil flow.

3. Turbocharger according to at least one of Claims 1 or 2,
**characterized**
**in that** at least one sealing element (42, 44) is arranged in the gap (30) in order to reduce or substantially prevent a passage of oil.

4. Turbocharger according to at least one of Claims 1 to 3,
**characterized**
**in that** a depression (46) is provided in the shoulder (28) of the shaft (12), the depression (46) being arranged adjacent to the gap (30) and serving to receive lubricating oil which passes through the oil throttle (32).

5. Turbocharger according to at least one of Claims 1 to 4,
**characterized**
**in that** the gap (30) is of at least partially or fully encircling design.

6. Turbocharger according to at least one of Claims 1 to 5,
**characterized**
**in that** the gap (30) is arranged on that side of the shaft (12) to which the turbine wheel (24) and/or the compressor wheel is fastened.

7. Turbocharger according to at least one of Claims 1 to 6,
**characterized**
**in that** an outlet (38) for the lubricating oil of the bearing arrangement (14) is provided in the housing (10).

8. Turbocharger according to at least one of Claims 1 to 7,
**characterized**
**in that** an oil collecting chamber (40) is arranged opposite the shoulder (28) of the shaft (12).

9. Turbocharger according to Claim 8,
**characterized**
**in that**, in the shaft (12), the depression (46) is provided in the shoulder (28) opposite the oil collecting chamber (40).

10. Vehicle having a turbocharger according to one of Claims 1 to 9.

## Revendications

1. Turbocompresseur avec un boîtier de turbocompresseur (100), comprenant :
un orifice de passage de l'arbre (12),
- dans lequel est logé l'arbre (12), à l'intérieur du boîtier (100), à l'aide d'un dispositif de palier (14) en vue d'un fonctionnement à rotation,
- qui est alimenté en huile lubrifiante pour la lubrification des paliers (14),
- dans lequel est prévu un épaulement (28) de l'arbre (12) dépassant sur la hauteur du côté externe d'au moins un palier (14), entre lequel épaulement et le boîtier (100) se trouve un interstice (30), lequel se présente sous la forme d'un restricteur d'huile lubrifiante (32) afin d'au moins, réduire le passage d'huile lubrifiante des côtés du palier (14), et
- dans lequel est aménagée une niche (34), à l'intérieur du boîtier (10), qui rallie l'interstice (30),
**caractérisé en ce que** le boîtier (10) et l'arbre (12) forment un compartiment (36) pour contenir le volume de détente d'huile lubrifiante.

2. Turbocompresseur selon la revendication 1,
**caractérisé en ce que**
l'interstice (30) présente une hauteur de l'interstice qui est appropriée à restreindre un flux d'huile lubrifiante.

3. Turbocompresseur selon au moins l'une quelconque des revendications 1 ou 2,
**caractérisé en ce que**
au moins un élément d'étanchéité (42, 44) est positionné dans l'interstice (30) visant à réduire ou à empêcher, pour ce qui est de l'essentiel, un passage d'huile.

4. Turbocompresseur selon au moins l'une quelconque des revendications 1 à 3,
**caractérisé en ce que**
une encoche (46) est prévue dans l'épaulement (28) de l'arbre (12), laquelle encoche (46) est positionnée à la suite de l'interstice (30) et sert à recueillir de l'huile lubrifiante lui parvenant à travers le restricteur d'huile (32).

5. Turbocompresseur selon au moins l'une quelconque des revendications 1 à 4,
**caractérisé en ce que**
l'interstice (30) est formé sur toute la périphérie ou une partie de celle-ci.

6. Turbocompresseur selon au moins l'une quelconque des revendications 1 à 5,
**caractérisé en ce que**
l'interstice (30) est positionné du côté de l'arbre (12), sur lequel est fixé la roue de turbine (24) et/ou la roue de compresseur.

7. Turbocompresseur selon au moins l'une quelconque des revendications 1 à 6,
**caractérisé en ce que**
une évacuation est prévue (38) pour l'huile lubrifiante du dispositif de palier (14) au sein du boîtier(10).

8. Turbocompresseur selon au moins l'une quelconque des revendications 1 à 7,
**caractérisé en ce que**
un compartiment pour la collecte d'huile (40) est positionné en face de l'épaulement (28) de l'arbre (12).

9. Turbocompresseur selon la revendication 8,
**caractérisé en ce que**
l'encoche (46) dans l'arbre (12) est prévue au niveau de l'épaulement (28) face au compartiment pour la collecte d'huile (40).

10. Véhicule avec un turbocompresseur selon l'une quelconque des revendications 1 à 9.
